# EUROPÄISCHE PATENTSCHRIFT

(11) **EP 2 688 781 B1**
(45) Veröffentlichungstag und Bekanntmachung des Hinweises auf die Patenterteilung: **13.05.2015**
(21) Anmeldenummer: 12713001.1
(22) Anmeldetag: 22.03.2012
(51) Int. Cl.: B60T 11/26, B60T 17/06

(54) **DRUCKMITTELBEHÄLTER FÜR EINE HYDRAULISCHE KRAFTFAHRZEUGBREMSANLAGE UND VERFAHREN ZUR BEFÜLLUNG**
PRESSURE MEDIUM RESERVOIR FOR A HYDRAULIC MOTOR VEHICLE BRAKE SYSTEM, AND FILLING METHOD
CONTENANT DE FLUIDE HYDRAULIQUE POUR UN SYSTÈME DE FREINAGE HYDRAULIQUE D'AUTOMOBILE ET PROCÉDÉ DE REMPLISSAGE

(30) Priorität: 24.03.2011 DE 102011006014; 13.01.2012 DE 102012200515
(43) Veröffentlichungstag der Anmeldung: 29.01.2014
(73) Patentinhaber: Continental Teves AG & Co. OHG, 60488 Frankfurt (DE)
(72) Erfinder: DRUMM, Stefan, A., 55291 Saulheim (DE)
(86) Internationale Anmeldenummer: PCT/EP2012/055150
(87) Internationale Veröffentlichungsnummer: WO 2012/127014

(56) Entgegenhaltungen:
- EP-A2- 1 894 831
- WO-A1-87/03850
- GB-A- 1 019 945

## Beschreibung

Die Erfindung betrifft einen Druckmittelbehälter für eine hydraulische Kraftfahrzeugbremsanlage nach den Merkmalen vom Oberbegriff vom Anspruch 1.

Die Aufgaben gattungsgemäßer Druckmittelbehälter (kurz Behälter) sind vielfältig und bestehen primär darin, als Aufnahmereservoir für schwankenden Druckmittelfüllstand zu dienen, der durch unvermeidbare Systemprozesse wie Druckmittelschwappen sowie durch veränderlichen Füllstand im Bremssystem (Elastizitäten, Bremsbelagverschleißvorgang und Bremsbelagaustauschvorgang, Belagverschleißnachstellvorgang, hydraulische Regelprozesse im elektronischen Bremssystem) ausgelöst sein kann. Während ein Druckmittelreservoir mit besonders groß dimensionierter Aufnahmekapazität zwar funktionale Vorteile bei großen Füllstandsschwankungen verspricht, widerspricht dies regelmäßig der Forderung nach reduziertem Einbauraum sowie dem sonstigen Anforderungsprofil (Kosten etc.) an moderne Kraftfahrzeuge. Folgerichtig wird ein Aufnahmereservoir für Bremsflüssigkeit grundsätzlich entsprechend der Mindestanforderung und unter Berücksichtigung eines Notbetätigungsreservoirs so klein wie möglich dimensioniert, um dem gesetzten Anforderungsprofil vollständig gerecht zu werden. Daneben ist eine einfache, prozesssichere und automatisierte Unterdruck-Druckmittelbefüllbarkeit einer Kraftfahrzeugbremsanlage am Bandende von einem Kraftfahrzeughersteller gewünscht. Für Wartungsvorgänge soll das Druckmittel einfach und prozesssicher in einem Fachbetrieb ausgetauscht werden können. Dazu ist üblicherweise eine reversibel mit einem Verschlusselement verschließbare Einfüllöffnung vorgesehen, die für Befüllzwecke ein Kupplungsstück einer Unterdruck-Befüllvorrichtung aufnehmen kann. Üblicherweise wird dem Druckmittelbehälter ein elektronischer Füllstandsgeber zugeordnet. Dieser dient dazu, einem Fahrzeugführer im laufenden Kraftfahrzeugbetrieb zu signalisieren, wenn ein Druckmittelfüllstand im Behälter unter einen minimal zulässigen Druckmittelfüllstand absinkt.

EP 1 894 831 A2 offenbart ein Bremssystem mit einer hydraulischen Bremsanlage.

Bekannte Druckmittelbehälter weisen wenigstens eine Entlüftungsvorrichtung zum atmosphärischen Druckausgleich mit der Umgebungsatmosphäre auf um innerhalb des Behälters stets einen aktuellen Atmosphärendruck sicherzustellen. Eine Abweichung des Drucks innerhalb des Behälters vom aktuellen Atmosphärendruck kann zu unerwünschten Funktionsbeeinträchtigungen des hydraulischen Bremssystems führen, beispielsweise schleifenden Bremsen, einer verminderten Bremskraft oder einer Kontamination mit Fremdmedien.

Ferner werden Druckmittelbehälter meist derart gestaltet, dass eine Oberkante der Einfüllöffnung beim Einbringen des Druckmittelbehälters in seine vorgesehene Einbaulage im Kraftfahrzeug eine waagerechte Lage einnimmt.

Eine Kontrolle der Regulierung einer Druckmittelmenge beispielsweise durch Nachfüllen oder Absaugen bei Wartungsarbeiten erfolgt üblicherweise manuell, indem optische Füllstandsmarkierungen (Min/Max) an dem Druckmittelbehälter vorgesehen sind, die von der ausführenden Person zu beachten sind.

Es hat sich gezeigt, dass bestimmte, ggf. miteinander verkettete, Randbedingungen zu einem unzulässig hohen Druckmittelfüllstand führen können. Dazu gehören beispielsweise fehlerbehaftet ausgeführte Wartungsvorgänge die eine Überfüllung verursachen können, weil beispielsweise eine Max-Markierung beim Druckmittelnachfüllen oder beim Druckmittelaustausch nicht ordnungsgemäß beachtet worden ist. Ausgeführte Bremsbelagwechsel, die regelmäßig ein Zurücksetzen von Radbremszylindern erfordern, können dieses Problem ebenfalls verursachen, falls überschüssiges Druckmittel nicht aus dem Behälter abgesaugt worden ist. Elektronische Regelvorgänge oder ein Transfer anderweitig im Bremssystem vorgehaltener Druckmittelmengen, beispielsweise aus einem Aktuator, können, zumindest kurzzeitig, ebenfalls einen wachsenden Druckmittelflüssigkeitsstand in dem Druckmittelbehälter verursachen, was zu unbeabsichtigtem Druckmittelaustritt führen kann.

Der Erfindung liegt daher die Aufgabe zu Grunde, einen Druckmittelbehälter zu schaffen, der es bei dem vorstehend definierten Anforderungsprofil unter Vermeidung der Nachteile von dem Stand der Technik ermöglicht, zuverlässig einen schwankenden Druckmittelfüllstand zu verwalten, dennoch eine reduzierte Baugröße aufweist und eine Kraftfahrzeugwartung vereinfacht.

Die Aufgabe wird zusammen mit den kennzeichnenden Merkmalen von dem unabhängigen Patentanspruch 1 im Wesentlichen dadurch gelöst, dass der Druckmittelbehälter ein volumetrisch konstruktiv vorgegebenes Volumenreservoir zur Aufnahme von Druckmittel aufweist, welches bei Druckmitteleinfüll- oder Druckmittelnachfüllvorgängen durch die Einfüllöffnung nicht mit Druckmittel befüllbar, also hydraulisch abgeteilt ist, und wobei das genannte Volumenreservoir durch flüssigkeitsdichte Anordnung von dem Verschlusselement an der Einfüllöffnung in einen befüllbaren Zustand versetzbar beziehungsweise hydraulisch wirksam schaltbar ist.

Die Erfindung verfügt über den wesentlichen Vorteil, dass ein Ausgleichsvolumenreservoir garantiert wird, indem es beim Befüllprozess abgeteilt ist, und dass eine Druckmittelüberfüllung rein zwangsläufig-konstruktiv, also automatisch, mit geringem Kostenaufwand und geringem Bauraumaufwand ausgeschlossen ist, so dass schwankender Füllstand einfach und sicher verwaltet werden kann.

Vorteilhafterweise hat ein erfindungsgemäßer Druckmittelbehälter ein Volumenreservoir, das in Einbaulage im Kraftfahrzeug, oberhalb einer Oberkante einer Einfüllöffnung (Füllöffnungsoberkante), angeordnet ist. Dadurch kann der vorhandene Bauraum besonders effektiv ausgenutzt und Montageprozess einfach gehalten werden.

In vorteilhafter Weiterbildung der Erfindung kann das definierte Volumenreservoir in aufgelöster Bauweise als integrierte Ausformung einer Gehäuseoberschale oder in integrierter Bauweise als Integration bei dem Verschlusselements für die Einfüllöffnung ausgebildet sein. In diesem Zusammenhang bietet sich eine pilz- oder prismatisch-säulenförmige Bauform an, die rechtwinklig zur Einfüllöffnung angeordnet ist.

In weiterhin vorteilhafter Ausführungsform der Erfindung verzichtet das Verschlusselement bei aufgelöster Bauweise auf irgend welche Mittel zum Druckausgleich. Das Verschlusselement wird gegenüber Einfüllöffnung einfach dicht, insbesondere hermetisch dicht angeordnet.

Das Volumenreservoir ist weiterhin mit Vorteil derart dimensioniert, dass dessen Volumenaufnahmekapazität ausreichend ist, um alle betriebsbedingten Schwankungen des Druckmittelfüllstandes in dem Druckmittelbehälter sicher aufzunehmen, selbst wenn der Druckmittelbehälter bis zu einer Oberkante einer Einfüllöffnung befüllt worden ist. Die Erfindung ermöglicht es sogar, eine Befüllung bis zu der Oberkante der Einfüllöffnung als Regel vorzusehen, um eine Nivellierung von dem Druckmittel besonders einfach vorzusehen.

In einer weiteren vorteilhaften Weiterbildung der Erfindung ist es möglich, das definierte Gesamtvolumen des Volumenreservoirs in mehrere separierte Reservoirs zu zerlegen, welche an verschiedenen Orten und Positionen von einem Druckmittelbehälter angeordnet sind.

Es ist prinzipiell möglich, und erwünscht, konventionelle Druckmittelbehälter mit den Vorteilen der Erfindung nachträglich auszustatten, indem beispielsweise ein serienmäßigkonventionelles Verschlusselement durch das erfindungsgemäße Verschlusselement mit integriertem Reservoir, ausgewechselt wird. Es versteht sich, dass das Verschlusselement in diesem Fall an die Haupt- und Anschlussmaße von einem bestehenden Behälter angepasst ist, um an die Stelle dessen konventionellen Verschlusselements zu treten.

Es ist ferner möglich eine Druckausgleichsvorrichtung derart zu gestalten, dass diese als eine luftdurchlässige Verbindung an einem Ende an einer erhöhten Stelle innerhalb des Volumenreservoirs anschließt um am anderen Ende an einer geeigneten Stelle in die Umgebungsatmosphäre mündet, vorteilhafterweise besonders geschützt an ein luftdurchlässiges Gewinde zur Befestigung des Verschlusselements. Dadurch könnte ein Verstopfen der Druckausgleichsvorrichtung nahezu ausgeschlossen werden. Besonders sicher kann die Druckausgleichsvorrichtung ausgeführt sein, indem sie gaspermeable Mittel zum Verhindern eines Flüssigkeitstransfers oder Schaumaustritts aufweist, beispielsweise ein Membran oder ein Schwamm.

Die Erfindung erstreckt sich weiterhin auf ein Verfahren zur Druckmittelbefüllung, wobei in einem ersten Schritt eine Druckmittelbefüllung im Wesentlichen bis zu einer Oberkante einer Einfüllöffnung vorgenommen wird, bevor die Einfüllöffnung mit dem Verschlusselement verschlossen wird, um das definierte Volumenreservoir danach, nach Abschluss der Druckmittelbefüllung, zu aktivieren, beziehungsweise hydraulisch wirksam zu schalten.

Weitere Einzelheiten, Merkmale, Vorteile und Anwendungsmöglichkeiten der Erfindung gehen aus Unteransprüchen zusammen mit der Beschreibung anhand der Zeichnungen hervor. Nachstehend zeigt:
Fig.1 eine bekannte Hauptzylinder-Druckmittelbehälter-Baugruppe, weitgehend maßstäblich in Einbaulage in Seitenansicht,
Fig.2 eine Prinzipskizze einer ersten, integrierten Ausführungsform mit Reservoir am Verschlusselement, in Schnittdarstellung,
Fig.3 eine Prinzipskizze einer zweiten Ausführungsform in aufgelöster Bauweise mit Reservoir an der Gehäuseoberschale und mit einem Verschlusselement in Schnittdarstellung.
Fig.4 eine Prinzipskizze einer weiteren Ausführungsform in aufgelöster Bauweise mit einer kanalartigen Druckausgleichsvorrichtung, und
Fig.5 eine Prinzipskizze einer Ausführungsform in aufgelöster Bauweise mit einem am Verschlusselement angeordneten Füllstandsgeber.

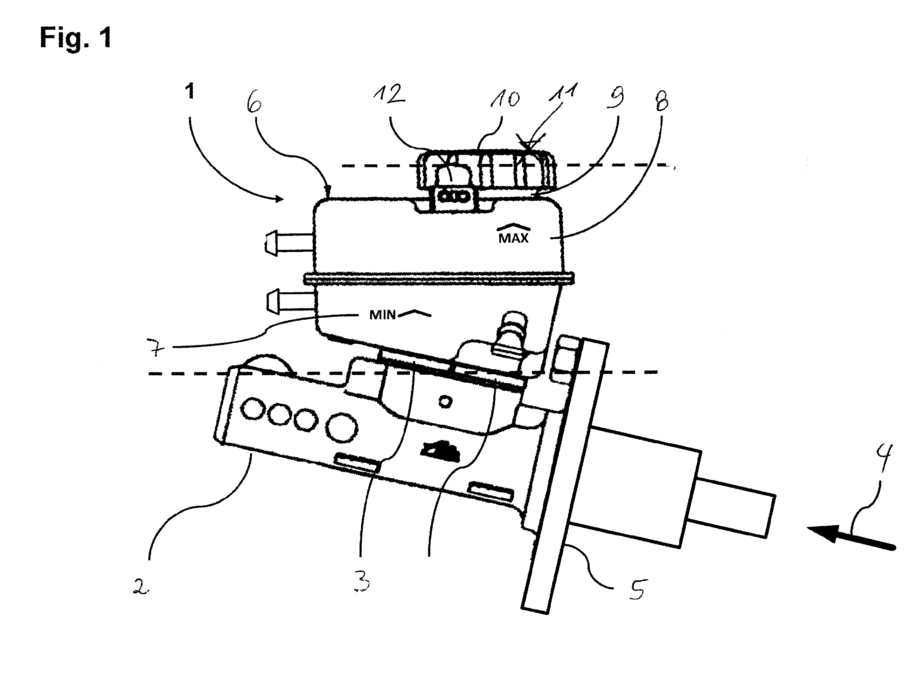

Nach Fig. 1 verfügt eine bekannte Baugruppe über einen Druckmittelbehälter 1 und einen hydraulischen Hauptzylinder 2, insbesondere vom Tandemhauptzylindertyp, zur Verwendung bei einer hydraulischen Kraftfahrzeugbremsanlage, wobei der Druckmittelbehälter 1 an dem Hauptzylinder 2 angeordnet und mit diesem über wenigstens einen hydraulischen Anschluss 3 verbunden ist. Der Hauptzylinder 2 wird zur Betätigung in Richtung vom Pfeil 4 durch eine Betätigungseinheit beaufschlagt. Die Baugruppe wird über eine Befestigungsschnittstelle 5 an einer sogenannten Spritzwand einer Fahrzeugkarosserie ortsfest angebracht.

Der Druckmittelbehälter 1 ist aus einem Gehäuse 6 gebildet, das meistens zwei miteinander verschweißte Halbschalen 7,8 aus thermoplastischem Kunststoff aufweist, die jeweils ein Oberteil (Oberschale) und ein Unterteil (Unterschale) definieren. Das Gehäuse 6 ist oft halbdurchsichtig ausgebildet, um Druckmittelfüllstand visuell prüfen und korrigieren zu können. Dazu sind Markierungen "Max" für maximalen Füllstand und "Min" für minimalen Druckmittelfüllstand am Gehäuse 6 dauerhaft angebracht, wobei sich ein Füllstand einer ordnungsgemäß eingerichteten betriebsbereiten und in einem unbetätigten Zustand und in Einbaulage befindlichen Bremsanlage im Bereich zwischen beiden Markierungen, vorzugsweise mittig, befinden sollte.

Das Gehäuse 6 verfügt über eine Einfüllöffnung 9 zum Befüllen und zum Nachfüllen von Druckmittel, die durch ein Verschlusselement 10 reversibel lösbar verschlossen ist. Der Druckmittelbehälter befindet sich in Einbaulage und die Oberkante der Einfüllöffnung 9 ist waagerecht ausgerichtet. Das Verschlusselement 10 verfügt über eine Druckausgleichvorrichtung 11 zum pneumatischen Druckausgleich mit der Umgebungsatmosphäre. Im einfachsten Fall ist die Druckausgleichsvorrichtung 11 als Bohrung durch das Verschlusselement 10 ausgebildet. Ein Nachteil ist, dass Druckmittel aus dem Behälter 1 austreten kann, falls der Druckmittelstand im Behälter 1 ansteigt.

Der Druckmittelbehälter 1 verfügt weiterhin über einen elektronischen Füllstandsgeber 12, um eine Unterschreitung von dem minimalen Flüssigkeitsfüllstand ("Min"-Markierung) zu signalisieren.

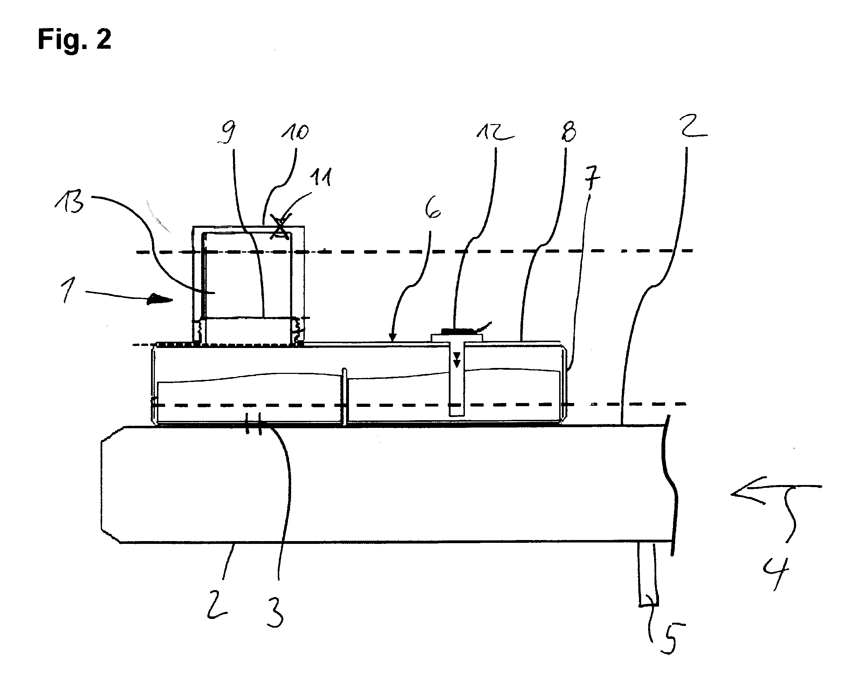

Eine erste Ausführungsform eines Druckmittelbehälters 1 mit einem definierten Volumenreservoir 13 in integrierter Bauweise ist in der Fig.2 stark vereinfacht verdeutlicht. Mit Fig. 1 übereinstimmende Bauteile sind mit übereinstimmenden Bezugsziffern versehen.

Der Druckmittelbehälter 1 umfasst ein Gehäuse mit Einfüllöffnung 9 und mit einem Volumenreservoir 13, das am Verschlusselement 10 integriert vorgesehen ist. Hierbei ist das Verschlusselement 10 reversibel lösbar sowie dicht an der Einfüllöffnung 9 angebracht. Die Dichtigkeit ist mindestens flüssigkeitsdicht, mit Vorteil jedoch hermetisch dicht (flüssigkeitsdicht und gasdicht) gewählt.

Das Verschlusselement 10 ist säulenartig so ausgebildet, dass es oberhalb einer Einfüllöffnungsoberkante das integrierte Volumenreservoir 13 ausbildet. Zur Ausbildung vom Volumenreservoir 13 ist das Verschlusselement 10 zylindrisch-rohrförmig mit einem offenen und mit einem geschlossenen Ende gestaltet, das an die Schnittstelle vom Druckmittelbehälter 1 anschließt.

Die Volumenkapazität von dem Volumenreservoir 13 ist derart ausgelegt, dass sämtliche möglichen Betriebszustände berücksichtigt sind, selbst wenn eine randvolle Druckmittelbefüllung vorgenommen wurde.

Eine Einfüllöffnungsoberkante begrenzt in diesem Zusammenhang konstruktiv, also automatisch, eine maximale Druckmitteleinfüllmenge, die in Normallage, im Einbauzustand, und ohne ein angebrachtes Verschlusselement in den Druckmittelbehälter 1 einfüllbar ist. Denn überflüssiges Druckmittel fließt einfach, ungenutzt ab und kann zur Wiederverwendung aufgefangen werden Dadurch ist sichergestellt, dass das Volumenreservoir 13 nach dem Druckmitteleinfüllvorgang vollständig für Ausgleichszwecke zur Verfügung steht, und dass das Volumenreservoir 13 erst mit dem Aufsetzen vom Verschlusselement 10 an der Einfüllöffnung 9 aktiviert, beziehungsweise hydraulisch wirksam geschaltet wird.

Durch das garantiert vorgesehene und nicht missbräuchlich nutzbare Druckmittelaufnahmekapazität des Volumenreservoirs 13 ist der erfindungsgemäße Druckmittelbehälter 1 automatisch zwangsläufig in der Lage, im Sinne eines Ausdehnungsgefäßes ein Druckmittelvolumen aufzunehmen, das aus dem Bremssystem in den Druckmittelbehälter 1 eingespeist wird, selbst wenn der Druckmittelbehälter 1 bei dessen Druckmittelbefüllung bis zu einer Einfüllöffnungsoberkante befüllt wurde. Fehler durch Überfüllen werden vermieden.

Weiterhin ist ein elektronischer Füllstandsgeber 12 am Gehäuse 6 angebracht vorgesehen. Alternativ kann der Füllstandsgeber 12 für sämtliche Varianten an anderen Komponenten, beispielsweise an dem Verschlusselement 10, angeordnet sein.

Eine Verbindung einer erhöhten Stelle des Volumenreservoirs 13 mit der Umgebungsatmosphäre ist mittels einer Druckausgleichsvorrichtung 11 realisiert. Diese kann als eine kleine Bohrung oder in weiteren Ausführungsformen vorliegen, beispielsweise in Form von kleineren Stutzen, Durchbrüchen, welche mit luftdurchlässigen Mitteln verschlossenen werden können oder als ein in den Verschlusselement 10 integrierter Kanal, welcher in einem luftdurchlässigen Gewinde zur Befestigung des Verschlusselements 10 außerhalb der Einfüllöffnung 9 mündet, so dass die Einfüllöffnung 9 weiter hin gegenüber Verschlusselement 10 abgedichtet ist.

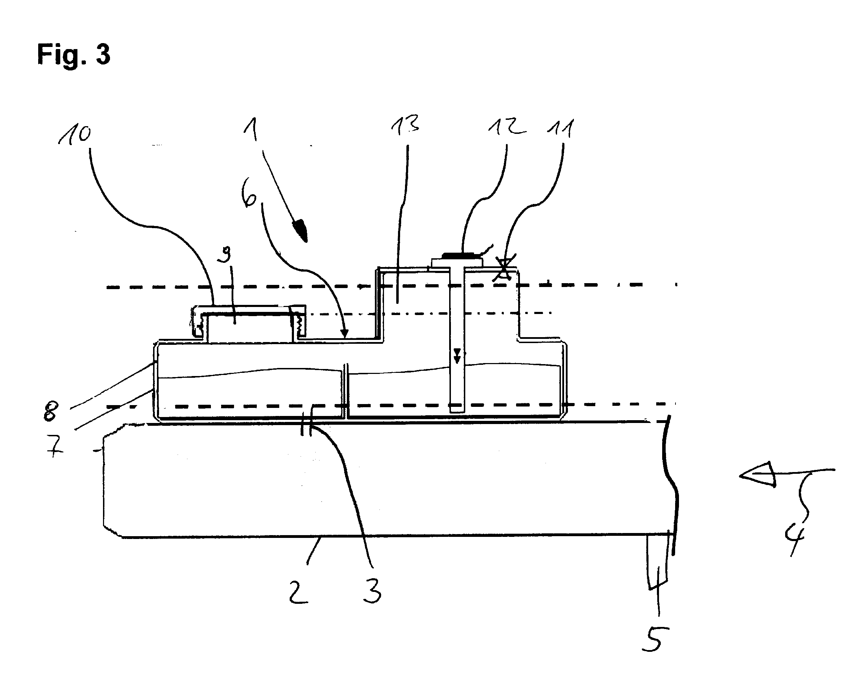

Die Fig.3 zeigt eine andere Ausführungsform in separat, aufgelöster Bauweise. In Bezug auf Fig. 3 werden nachstehend ausschließlich die Unterschiede gegenüber der Ausführung nach Fig. 2 beschrieben, um unnötige Wiederholungen zu vermeiden. Im Kern ist bei der Ausführung nach Fig. 3 Verschlusselement 10 vom Volumenreservoir 13 getrennt, also aufgelöst, vorgesehen, indem das Verschlusselement 10 ausschließlich eine hermetisch dichte Verschlussfunktion für die Einfüllöffnung 9 übernimmt, während das Volumenreservoir 13 in der Halbschale 8 integriert vorgesehen ist.

Eine Druckausgleichsvorrichtung 11 mit Verbindung zur Atmosphäre ist an der oberen Halbschale 8 oder an einer anderen Komponente mit erhöhter Position, wie beispielsweise im Bereich von dem Füllstandsgeber 12 platziert.

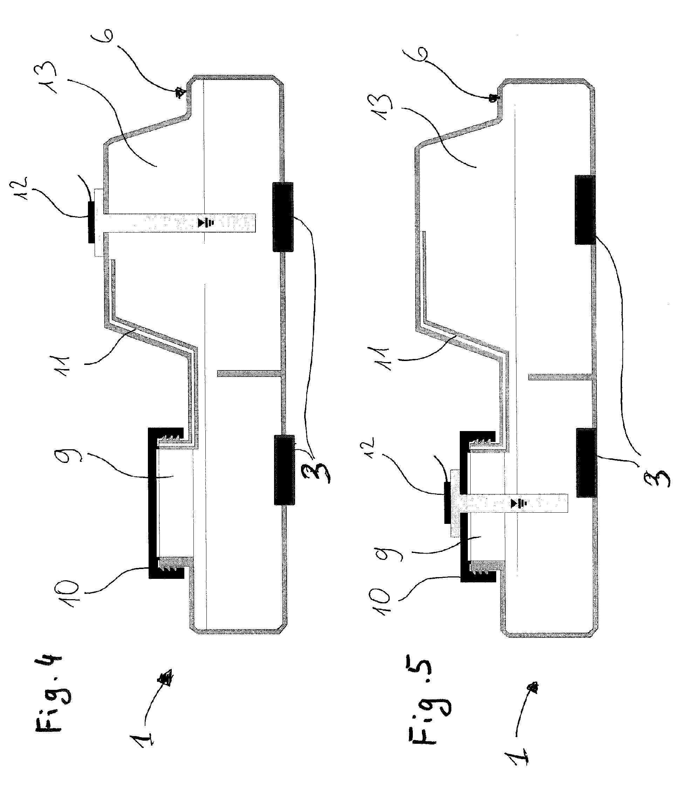

Die Fig.4 zeigt eine weitere Ausführungsform des Druckmittelbehälters 1 mit dem Volumenreservoir 13 in aufgelöster Bauweise realisiert. Die Druckausgleichsvorrichtung 11 ist hierbei als ein Kanal ausgebildet, welcher den Innenraum des Volumenreservoirs 13 mit einem luftdurchlässigen Gewinde zur Befestigung des Verschlusselements 10 verbindet und außerhalb der Einfüllöffnung 9 an das Gewinde mündet, so dass die Einfüllöffnung 9 weiter hin gegenüber Verschlusselement 10 abgedichtet ist. Es sind jedoch weitere Ausführungsformen der Druckausgleichsvorrichtung 11 denkbar, beispielsweise in Form von kleineren Stutzen, Durchbrüchen, welche mit luftdurchlässigen Mitteln verschlossenen werden können oder andersmündenen Kanälen.

In der Ausführungsform nach Fig.5 ist der Füllstandsgeber 12 im Verschlusselement 10 angeordnet vorgesehen.

### Bezugszeichenliste

- 1: Druckmittelbehälter
- 2: Hauptzylidner
- 3: Anschluss
- 4: Betätigungsrichtung
- 5: Befestigungsschnittstelle
- 6: Gehäuse
- 7: Halbschale
- 8: Halbschale
- 9: Einfüllöffnung
- 10: Verschlusselement
- 11: Druckausgleichsvorrichtung
- 12: Füllstandsgeber
- 13: Volumenreservoir

## Patentansprüche

1. Druckmittelbehälter (1), für eine hydraulische Kraftfahrzeugbremsanlage, mit einem Gehäuse (6), mit einer Einfüllöffnung (9), mit einem Verschlusselement (10) und mit wenigstens einer hydraulischen Verbindung zur hydraulischen Druckmittelversorgung der Kraftfahrzeugbremsanlage **dadurch gekennzeichnet, dass** ein zusätzlich konstruktiv vorgegebenes, definiertes Volumenreservoir (13) zur Druckmittelaufnahme durch Anordnung des Verschlusselements (10) an der Einfüllöffnung (9) hydraulisch wirksam aktiviert ist.

2. Druckmittelbehälter (1) für eine hydraulische Kraftfahrzeugbremsanlage nach Anspruch 1 **dadurch gekennzeichnet, dass** das Volumenreservoir (13) sich räumlich oberhalb einer Oberkante der Einfüllöffnung (9) des in einer vorgesehenen Einbaulage befindlichen Druckmittelbehälters (1) erstreckt.

3. Druckmittelbehälter (1) für eine hydraulische Kraftfahrzeugbremsanlage nach Anspruch 1 **dadurch gekennzeichnet, dass** das Verschlusselement (10) flüssigkeitsdicht sowie lösbar an der Einfüllöffnung (9) angeordnet ist.

4. Druckmittelbehälter (1) für eine hydraulische Kraftfahrzeugbremsanlage nach Anspruch 1 **dadurch gekennzeichnet, dass** das Verschlusselement (10) hermetisch dicht sowie lösbar an der Einfüllöffnung (9) angeordnet ist.

5. Druckmittelbehälter (1) für eine hydraulische Kraftfahrzeugbremsanlage nach Anspruch 1 **dadurch gekennzeichnet, dass** eine Schnittstelle zwischen dem Verschlusselement (10) und der Einfüllöffnung (9) flüssigkeitsdicht sowie lösbar ausgeführt ist.

6. Druckmittelbehälter (1) für eine hydraulische Kraftfahrzeugbremsanlage nach Anspruch 1 **dadurch gekennzeichnet, dass** eine Schnittstelle zwischen dem Verschlusselement (10) und der Einfüllöffnung (9) hermetisch dicht sowie lösbar ausgebildet ist.

7. Druckmittelbehälter (1) für eine hydraulische Kraftfahrzeugbremsanlage nach Anspruch 1, **dadurch gekennzeichnet, dass** das Volumenreservoir (13) am Verschlusselement (10) integriert vorgesehen ist.

8. Druckmittelbehälter (1) für eine hydraulische Kraftfahrzeugbremsanlage nach Anspruch 1, **dadurch gekennzeichnet, dass** das Volumenreservoir (13) als eine gesonderte Ausformung von einer Halbschale (7,8) in aufgelöster Bauweise gesondert zu dem Verschlusselement (10) vorgesehen ist.

9. Druckmittelbehälter (1) für eine hydraulische Kraftfahrzeugbremsanlage nach Anspruch 1, **dadurch gekennzeichnet, dass** das Volumenreservoir (13) aus mindestens zwei örtlich voneinander getrennten Teilreservoirs gebildet ist.

10. Druckmittelbehälter (1) für eine hydraulische Kraftfahrzeugbremsanlage nach Anspruch 7, **dadurch gekennzeichnet, dass** das Verschlusselement (10) eine Druckausgleichsvorrichtung (11) aufweist.

11. Druckmittelbehälter (1) für eine hydraulische Kraftfahrzeugbremsanlage nach Ansprüchen 8 oder 9, **dadurch gekennzeichnet, dass** dem Volumenreservoir (13) eine Druckausgleichsvorrichtung (11) zugeordnet ist, die gesondert von dem Verschlusselement (10) vorgesehen ist.

12. Druckmittelbehälter (1) für eine hydraulische Kraftfahrzeugbremsanlage nach Ansprüchen 10 oder 11, **dadurch gekennzeichnet, dass** die Druckausgleichvorrichtung (11) eine gasdurchlässige Verbindung mit einer Umgebungsatmosphäre ermöglicht, wobei ein Ende der Verbindung innerhalb des Volumenreservoirs (13) in unmittelbarer Nähe seiner höchsten Stelle angeordnet ist, wobei die höchste Stelle in der vorgesehenen Einbaulage des Druckmittelbehälters (1) definierbar ist.

13. Druckmittelbehälter (1) für eine hydraulische Kraftfahrzeugbremsanlage nach Ansprüchen 10 oder 11, **dadurch gekennzeichnet, dass** die Druckausgleichvorrichtung (11) eine gasdurchlässige Verbindung mit einer Umgebungsatmosphäre ist, wobei ein Ende der Verbindung dem Füllstutzen zugeordnet ist.

14. Verfahren zum Befüllen eines Druckmittelbehälters (1) mit den Merkmalen von einem oder mehreren der vorhergehenden Ansprüche 1-13, **dadurch gekennzeichnet, dass**:
- in einem ersten Schritt eine Druckmittelbefüllung von dem Druckmittelbehälter (1) im Wesentlichen bis zu einer Oberkante der Einfüllöffnung (9) vorgenommen wird,
- in einem zweiten Schritt die Einfüllöffnung (9) mit dem Verschlusselement (10) dicht verschlossen wird, und
- das definierte Volumenreservoir (13) durch das Verschließen der Einfüllöffnung (9) hydraulisch wirksam aktiviert wird.

## Claims

1. Pressure medium container (1) for a hydraulic motor vehicle brake system, having a housing (6), having a filler opening (9), having a closure element (10) and having at least one hydraulic connection to the hydraulic pressure medium supply of the motor vehicle brake system, **characterized in that** an additionally structurally predetermined defined volume reservoir (13) for receiving pressure medium can be rendered hydraulically effective by arranging the closure element (10) on the filler opening (9).

2. Pressure medium container (1) for a hydraulic motor vehicle brake system according to Claim 1, **characterized in that** the volume reservoir (13) extends spatially above an upper edge of the filler opening (9) of the pressure medium container (1) situated in an envisaged installation position.

3. Pressure medium container (1) for a hydraulic motor vehicle brake system according to Claim 1, **characterized in that** the closure element (10) is arranged fluidtightly and releasably on the filler opening (9).

4. Pressure medium container (1) for a hydraulic motor vehicle brake system according to Claim 1, **characterized in that** the closure element (10) is arranged in a hermetically sealed and releasable manner on the filler opening (9).

5. Pressure medium container (1) for a hydraulic motor vehicle brake system according to Claim 1, **characterized in that** an interface between the closure element (10) and the filler opening (9) is of fluidtight and releasable design.

6. Pressure medium container (1) for a hydraulic motor vehicle brake system according to Claim 1, **characterized in that** an interface between the closure element (10) and the filler opening (9) is of hermetically sealed and releasable design.

7. Pressure medium container (1) for a hydraulic motor vehicle brake system according to Claim 1, **characterized in that** the volume reservoir (13) is provided in an integrated manner on the closure element (10).

8. Pressure medium container (1) for a hydraulic motor vehicle brake system according to Claim 1, **characterized in that** the volume reservoir (13) is provided separately from the closure element (10) in a divided design, as a separate molded portion of a half shell (7, 8).

9. Pressure medium container (1) for a hydraulic motor vehicle brake system according to Claim 1, **characterized in that** the volume reservoir (13) is formed by at least two reservoir sections at separate locations.

10. Pressure medium container (1) for a hydraulic motor vehicle brake system according to Claim 7, **characterized in that** the closure element (10) has a pressure equalizing device (11).

11. Pressure medium container (1) for a hydraulic motor vehicle brake system according to Claim 8 or 9, **characterized in that** the volume reservoir (13) is assigned a pressure equalizing device (11), which is provided separately from the closure element (10).

12. Pressure medium container (1) for a hydraulic motor vehicle brake system according to Claim 10 or 11, **characterized in that** the pressure equalizing device (11) allows a gas-permeable connection to a surrounding atmosphere, wherein one end of the connection is arranged inside the volume reservoir (13), in the immediate vicinity of the highest point thereof, wherein the highest point can be defined in the envisaged installation position of the pressure medium container (1).

13. Pressure medium container (1) for a hydraulic motor vehicle brake system according to Claim 10 or 11, **characterized in that** the pressure equalizing device (11) is a gas-permeable connection to a surrounding atmosphere, wherein one end of the connection is assigned to the filler neck.

14. Method for filling a pressure medium container (1) having the features of one or more of preceding Claims 1-13, **characterized in that**:
- in a first step, the pressure medium container (1) is filled with pressure medium substantially up to an upper edge of the filler opening (9),
- in a second step, the filler opening (9) is closed in a leaktight manner by means of the closure element (10), and
- the defined volume reservoir (13) is rendered hydraulically effective by closing the filler opening (9).

## Revendications

1. Contenant de fluide hydraulique (1) pour un système de freinage hydraulique de véhicule automobile, comprenant un boîtier (6), comprenant une ouverture de remplissage (9), comprenant un élément de fermeture (10) et comprenant au moins un raccordement hydraulique à l'alimentation hydraulique en fluide hydraulique du système de freinage de véhicule automobile, **caractérisé en ce qu'**un réservoir volumétrique défini (13), prédéfini en outre de manière structurale, pour recevoir du fluide hydraulique est activé de manière hydrauliquement effective par agencement de l'élément de fermeture (10) sur l'ouverture de remplissage (9).

2. Contenant de fluide hydraulique (1) pour un système de freinage hydraulique de véhicule automobile selon la revendication 1, **caractérisé en ce que** le réservoir volumétrique (13) s'étend spatialement au-dessus d'un bord supérieur de l'ouverture de remplissage (9) du contenant de fluide hydraulique (1) se trouvant dans une position d'installation prévue.

3. Contenant de fluide hydraulique (1) pour un système de freinage hydraulique de véhicule automobile selon la revendication 1, **caractérisé en ce que** l'élément de fermeture (10) est disposé sur l'ouverture de remplissage (9) de manière étanche aux liquides ainsi que de manière amovible.

4. Contenant de fluide hydraulique (1) pour un système de freinage hydraulique de véhicule automobile selon la revendication 1, **caractérisé en ce que** l'élément de fermeture (10) est disposé sur l'ouverture de remplissage (9) de manière fermée hermétiquement ainsi que de manière amovible.

5. Contenant de fluide hydraulique (1) pour un système de freinage hydraulique de véhicule automobile selon la revendication 1, **caractérisé en ce qu'**une interface entre l'élément de fermeture (10) et l'ouverture de remplissage (9) est réalisée de manière étanche aux liquides ainsi que de manière amovible.

6. Contenant de fluide hydraulique (1) pour un système de freinage hydraulique de véhicule automobile selon la revendication 1, **caractérisé en ce qu'**une interface entre l'élément de fermeture (10) et l'ouverture de remplissage (9) est réalisée de manière fermée hermétiquement ainsi que de manière amovible.

7. Contenant de fluide hydraulique (1) pour un système de freinage hydraulique de véhicule automobile selon la revendication 1, **caractérisé en ce que** le réservoir volumétrique (13) est prévu de manière intégrée sur l'élément de fermeture (10).

8. Contenant de fluide hydraulique (1) pour un système de freinage hydraulique de véhicule automobile selon la revendication 1, **caractérisé en ce que** le réservoir volumétrique (13) est prévu en tant que partie conformée séparée d'une demi-coque (7, 8), de manière séparée de l'élément de fermeture (10) dans une construction divisée.

9. Contenant de fluide hydraulique (1) pour un système de freinage hydraulique de véhicule automobile selon la revendication 1, **caractérisé en ce que** le réservoir volumétrique (13) est formé à partir d'au moins deux réservoirs partiels séparés spatialement l'un de l'autre.

10. Contenant de fluide hydraulique (1) pour un système de freinage hydraulique de véhicule automobile selon la revendication 7, **caractérisé en ce que** l'élément de fermeture (10) comprend un dispositif de compensation de pression (11).

11. Contenant de fluide hydraulique (1) pour un système de freinage hydraulique de véhicule automobile selon la revendication 8 ou 9, **caractérisé en ce qu'**un dispositif de compensation de pression (11) est associé au réservoir volumétrique (13), lequel dispositif de compensation de pression est prévu de manière séparée de l'élément de fermeture (10).

12. Contenant de fluide hydraulique (1) pour un système de freinage hydraulique de véhicule automobile selon la revendication 10 ou 11, **caractérisé en ce que** le dispositif de compensation de pression (11) permet un raccordement perméable aux gaz à une atmosphère environnante, une extrémité du raccordement étant disposée à l'intérieur du réservoir volumétrique (13) à proximité immédiate de son point le plus haut, le point le plus haut pouvant être défini dans la position d'installation prévue du contenant de fluide hydraulique (1).

13. Contenant de fluide hydraulique (1) pour un système de freinage hydraulique de véhicule automobile selon la revendication 10 ou 11, **caractérisé en ce que** le dispositif de compensation de pression (11) est un raccordement perméable aux gaz à une atmosphère environnante, une extrémité du raccordement étant associée à la tubulure de remplissage.

14. Procédé de remplissage d'un contenant de fluide hydraulique (1) présentant les caractéristiques d'une ou de plusieurs des revendications précédentes 1 à 13, **caractérisé en ce que** :
- lors d'une première étape, un remplissage par du fluide hydraulique du contenant de fluide hydraulique (1) est effectué essentiellement jusqu'à un bord supérieur de l'ouverture de remplissage (9),
- lors d'une deuxième étape, l'ouverture de remplissage (9) est fermée hermétiquement à l'aide de l'élément de fermeture (10), et
- le réservoir volumétrique défini (13) est activé de manière hydrauliquement effective par la fermeture de l'ouverture de remplissage (9).
